# EUROPEAN PATENT APPLICATION

(11) **EP 2 096 702 A1**
(43) Date of publication of application: **02.09.2009**
(21) Application number: 09153017.0
(22) Date of filing: 17.02.2009
(51) Int. Cl.: H01M 10/40, H01M 4/02, H01G 9/00

(54) **Electric Storage Device, Electrode, Method for Fabricating Electrode, and Management Method**

(30) Priority: 25.02.2008 JP 2008042367
(71) Applicant: Fuji Jukogyo Kabushiki Kaisha, Tokyo 160-8316 (JP)
(72) Inventor: Utsunomiya, Takashi Fuji Jukogyo Kabushiki Kaisha, Tokyo 160-8316 (JP); Nagai, Mitsuru Fuji Jukogyo Kabushiki Kaisha, Tokyo 160-8316 (JP); Nakazoto, Kunio Fuji Jukogyo Kabushiki Kaisha, Tokyo 160-8316 (JP); Ando, Nobuo Fuji Jukogyo Kabushiki Kaisha, Tokyo 160-8316 (JP)
(74) Representative: Sajda, Wolf E.

(57) **Abstract**

A mixture layer for an electrode (11, 12, 14; 110, 120, 140) is formed on a punched current collector. For example, the mixture layer is made of an active material, a conductive assistant, a binder, and the like. The mixture layer having a structure as described above is formed into a slurry, for example, and applied onto the current collector (11b, 12b, 14b; 110b, 120b, 140b). The applied mixture layer is dried to fabricate an electrode (11, 12, 14; 110, 120, 140). The thus formed electrode (11, 12, 14; 110, 120, 140) is used to assemble an electric storage device. Upon the assembly, lithium ions are pre-doped into a negative electrode (11, 110). The pre-doping time is determined according to the air permeability of the electrodes (11, 12, 14; 110, 120, 140).

## Description

### BACKGROUND OF THE INVENTION

### 1. Field of the Invention

The present invention relates to a technology of an electrode, and more particularly, to a technology that is well adaptable to fabricate an electrode having a current collector having holes and a mixture layer, which is made of an active material, formed on the current collector.

### 2. Description of the Related Arts

In the recent situation where the environmental issue, particularly the vehicle-exhaust gas emission, is widely talked about, efforts are made to develop environment-friendly electric vehicles and the like. In the electric vehicle development, the strong development effort is focused on the electric storage device to be used as a power source. Many types of electric storage devices have been proposed for replacement of the conventional lead battery.

Current attention has been focused on an electric storage device such as a lithium ion secondary battery, lithium ion capacitor, electric double layer capacitor, etc. In these electric storage devices, a current collector made of a porous foil has newly been proposed instead of a conventional current collector. The proposed current collector made of a porous foil has holes through which ions in an electrolyte solution can pass.

An electrode using the current collector having holes is described in, for example, JP-A-11-067 217. The method of manufacturing the electrode is described in, for example, JP-A-2007-280 922.

Since the current collector used for the electrode is punched as described above, lithium ions are easy to be pre-doped into a negative electrode, for example. So far, assembling property or characteristic of an electric storage device has mainly been evaluated on the assumption that lithium ions are pre-doped into the negative electrode. The present inventors are involved in development of electric storage devices. The inventors have found that there is a variation in ease of pre-doping of lithium ions into a negative electrode.

When an electric storage device is evaluated, a starting point is defined such that lithium ions are pre-doped in a negative electrode in a predetermined amount. In this condition, careful attention is not focused on the variation in the manner of pre-doping. Specifically, in some electrodes, the pre-doping speed is fast, but in some electrodes, the pre-doping speed is slow. Even if the same active material is applied onto the same current collector, a significant difference is appears in the manner of pre-doping. At the future stage of mass production, the difference in time required for the pre-dope becomes a large obstacle in a manufacturing process.

When the time required for the pre-dope is extremely long, the lithium ions are non-uniformly pre-doped. The non-uniformity causes the variation in forming a coated film (SEI) called a solid electrolyte interface. Therefore, a stable cell characteristic is difficult to obtain. The potential also tends to vary, with the result that gas tends to generate, and micro short-circuits tend to occur due to the deposition of metal lithium.

Various factors are considered as the causes described above, such as an active material, temperature at pre-doping, current collector, etc. Accordingly, the present inventors have studied a technique capable of appropriately evaluating a pre-doping time in an entire electrode including the aforesaid things.

### SUMMARY OF THE INVENTION

The present invention aims to provide a technique for evaluating a pre-doping time of an electrode in an electric storage device.

The foregoing and other objects and novel features of the present invention will be apparent from the description of the specification of the present application and the attached drawings.

The summary of the representative invention, among the embodiments of the invention described in the present application, will be explained below.

In the present invention, a time required for pre-doping of an electrode is determined by employing air permeability as an index.

The effect obtained by the representative invention will briefly be described below.

The present invention provides an electric storage device in which the air permeability of an electrode to be used is suppressed to be within a predetermined range, whereby a defective electrode caused by pre-doping is prevented from being mounted on the electric storage device. The present invention allows the pre-doping time to fall within a predetermined time during the fabrication of the electric storage device, whereby productivity in a mass production can be enhanced.

In the present invention, the electrode can be sorted according to the time required for pre-doping with air permeability defined as an index. Therefore, compared to the conventional case in which the sorting reference is hardly established, the pre-doping time for the electrode can be made equal so as to enhance efficiency in the assembling process of a cell. Since the time required for pre-doping can be determined on the basis of air permeability, an electrode having long pre-doping time can be sorted beforehand. Therefore, a defective electrode can be prevented from being mounted on an electric storage device.

### BRIEF DESCRIPTION OF THE DRAWINGS

- FIG. 1: is a sectional view schematically showing a structure of an electric storage device using an electrode to which the present invention is applied;
- FIG. 2: is a sectional view schematically showing a structure of an electric storage device using an electrode to which the present invention is applied;
- FIG. 3: is an explanatory view showing a relationship between air permeability of an electrode and a pre-doping (PD) time;
- FIG. 4: is an explanatory view showing one example of setting air permeability of an electrode;
- FIG. 5: is an explanatory view showing a variation state of air permeability of actual electrode; and
- FIG. 6: is an explanatory view showing a capacity retention ratio when electrodes each having different air permeability are used.

### DETAILED DESCRIPTION OF THE PREFERRED EMBODIMENTS

Embodiments of the present invention will be described in detail below with reference to the drawings. The present invention is a technique relating to an electrode. Specifically, the present invention relates to a technique for sorting an electrode that can be used in an electric storage device. Air permeability is utilized for the sorting. When an electrode is sorted with the air permeability defined as an index, time or speed for a pre-doping can be adjusted within a predetermined range. The index for the sorting can naturally be used as an index of a management target or the like in manufacturing an electrode.

The air permeability described above is not less than 50 seconds/100 ml, and not more than 2000 seconds/100 ml when measured based on JIS P8117, 8111, and ISO 5636/5 per 642 mm². When the air permeability is less than 50 seconds/100 ml, the pre-doping time is decreased, but the formation of an electrode mixture layer is insufficient. Therefore, troubles are generated. Specifically, the electrode might fall off due to the insufficient strength, which leads to short-circuit of a cell. Alternatively, energy density of the cell is reduced due to the reduction in the electrode density. When the air permeability exceeds 2000 seconds/100 ml, the pre-doping time is increased, so that variation in cells is generated or the manufacturing cost is increased.

Accordingly, the optimum air permeability is not less than 50 seconds/100 ml, and not more than 2000 seconds/100 ml. For example, the air permeability of all electrodes used for an electric storage device can be set to be not less than 50 seconds/100 ml, and not more than 2000 seconds/100 ml. More preferable air permeability is not less than 50 seconds/100 ml and not more than 1000 seconds/100 ml.

In an electrode that is to be sorted by using the air permeability as an index, a current collector used in the electrode has an ion passing hole, for example. The current collector described above is purposely punched. The electrode thus configured can be used in a battery such as a lithium ion secondary battery, lithium ion capacitor, electric double layer capacitor, etc.

### Embodiment 1

In the following description of the present embodiment, a lithium ion secondary battery and a lithium ion capacitor are used as an electric storage device. The electric storage device is not limited to the lithium ion secondary battery or the lithium ion capacitor. An electric storage device having another configuration can be used in the present embodiment, as long as it suitably uses the punched current collector.

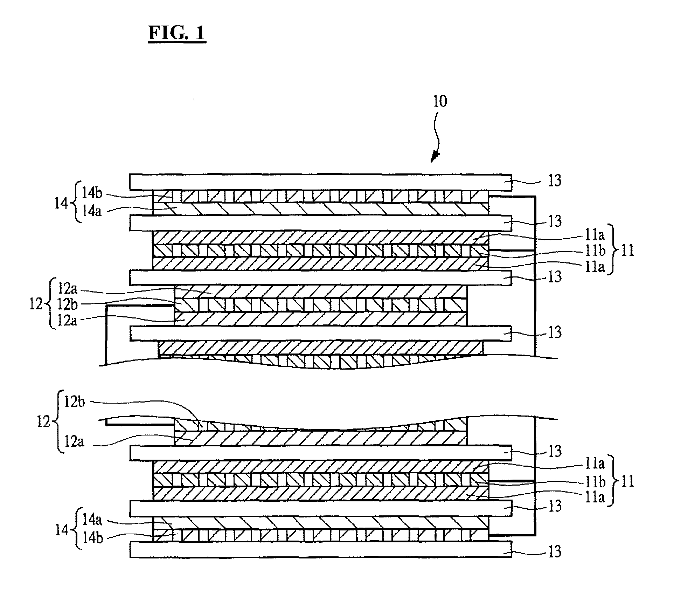

For example, the lithium ion secondary battery as an electric storage device has a main configuration as shown in FIG. 1. As shown in FIG. 1, the lithium ion secondary battery 10 includes negative electrodes 11 and positive electrodes 12. Each of the negative electrodes 11 and each of the positive electrodes 12 are laminated with a separator 13 interposed therebetween. The negative electrodes 11 are located at the ends of the laminate unit composed of a plurality of negative electrodes 11 and a plurality of positive electrodes 12.

Lithium electrodes 14, serving as a lithium ion source to the negative electrodes, are provided so as to be opposite to the negative electrodes 11 located at the ends of the laminate unit with the separators 13 interposed therebetween. As shown in FIG. 1, each of the lithium electrodes 14 has a metal lithium 14a formed on a current collector 14b. The lithium ions eluted from the lithium electrodes 14 are pre-doped into the negative electrodes 11.

Each of the negative electrodes 11 includes a negative electrode active material 11a formed on a current collector 11b. The negative electrode active material 11a is formed into a mixture for the electrode together with a binder. The negative electrode active material 11a is formed on the punched surface of the current collector 11b with a predetermined thickness. For example, the mixture layer described above can be formed such that slurry is firstly formed, and then the slurry is coated on the current collector 11b by a coater. The aperture ratio of the current collector 11b is, for example, 60 %. After the mixture layer is coated on the current collector, the resultant is dried to fabricate the electrode. The air permeability of the electrode is not less than 50 seconds/100 ml and not more than 2000 seconds/100 ml.

Each of the positive electrodes 12 includes a positive electrode active material 12a formed on a current collector 12b. The positive electrode active material 12a is formed into a mixture for the electrode together with a binder. The positive electrode active material 12a is formed on the punched surface of the current collector 12b with a predetermined thickness. The aperture ratio of the current collector 12b is, for example, 40 %. After the mixture layer has been coated on the current collector, the resultant is dried to fabricate the electrode. The air permeability of the electrode is not less than 50 seconds/100 ml and not more than 2000 seconds/100 ml.

Thus, an electrode laminate unit is formed by laminating negative electrodes 11 and positive electrodes 12 in an alternating fashion, wherein the separator 13 is interposed between each of the negative electrodes 11 and the positive electrodes 12, and the lithium electrodes 14 are located at the ends of the electrode laminate unit. The electrode laminate unit thus formed is impregnated into an electrolyte solution (not shown) so as to be formed into a cell.

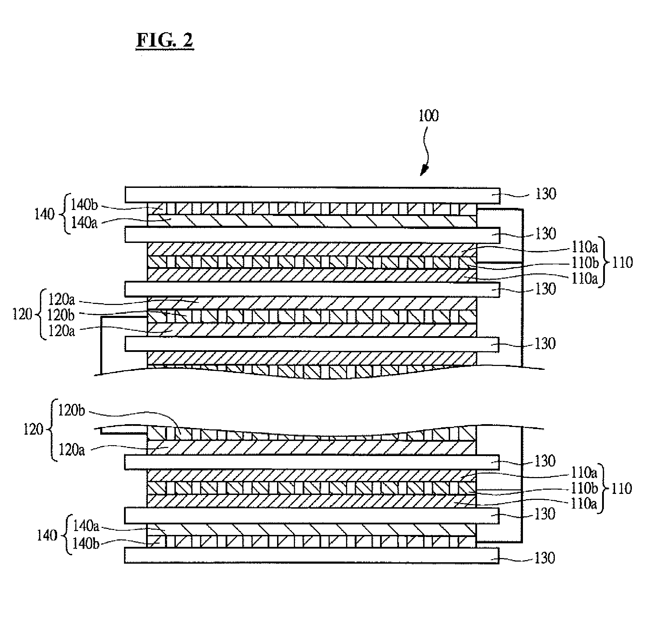

A lithium ion capacitor can be employed as an electric storage device as shown in FIG. 2. Namely, FIG. 2 shows a main configuration of the lithium ion capacitor. As shown in FIG. 2, the lithium ion capacitor 100 includes negative electrodes 110 and positive electrodes 120. Each of the negative electrodes 110 and each of the positive electrodes 120 are laminated with a separator 130 interposed therebetween. The negative electrodes 110 are located at the ends of the laminate unit composed of a plurality of negative electrodes 110 and a plurality of positive electrodes 120.

Lithium electrodes 140, serving as a lithium ion source to the negative electrodes, are provided so as to be opposite to the negative electrodes 110 located at the ends of the laminate unit with the separators 130 interposed therebetween. As shown in FIG. 2, each of the lithium electrodes 140 has a metal lithium 140a formed on a current collector 140b. The lithium ions eluted from the lithium electrodes 140 are pre-doped into the negative electrodes 110.

Each of the negative electrodes 110 includes a negative electrode active material 110a formed on a current collector 110b. The negative electrode active material 110a is formed into a mixture for the electrode together with a binder. The negative electrode active material 110a is formed on the punched surface of the current collector 110b with a predetermined thickness. The aperture ratio of the current collector 110b is, for example, 60 %, After the mixture layer has been coated on the current collector, the resultant is dried to fabricate the electrode. The air permeability of the electrode is not less than 50 seconds/100 ml and not more than 2000 seconds/100 ml.

Each of the positive electrodes 120 includes a positive electrode active material 120a formed on a current collector 120b. The positive electrode active material 120a is formed into a mixture for the electrode together with a binder. The positive electrode active material 120a is formed on the punched surface of the current collector 120b with a predetermined thickness. The aperture ratio of the current collector 120b is, for example, 40 %. After the mixture layer has been coated on the current collector, the resultant is dried to fabricate the electrode. The air permeability of the electrode is not less than 50 seconds/100 ml and not more than 2000 seconds/100 ml.

In the lithium ion capacitor having the above-mentioned configuration, the "positive electrodes" designate the electrodes from which electric current flows upon the discharge, while the "negative electrodes" designate the electrodes into which electric current flows upon the discharge.

The potentials of the positive electrodes and the negative electrodes after the negative electrodes and the positive electrodes have been short-circuited are preferably 2.0 V or less, for example. It is necessary in the lithium ion capacitor according to the present invention that the potential of the positive electrodes after the negative electrodes and the positive electrodes have been short-circuited is preferably set to 2 V or less, for example, by doping lithium ions into the negative electrodes, or positive electrodes, or both of the negative electrodes and the positive electrodes. In this manner, the capacity is increased.

In the lithium ion capacitor according to the present invention, it is preferable that the capacitance of the negative electrode per unit weight is three times or more larger than the capacitance of the positive electrode per unit weight. Further, it is preferable that the weight of the positive electrode active material is larger than that of the negative electrode active material. By so selecting the capacitance and the weight, the lithium-ion capacitor of high voltage and high capacity is prepared.

In the electric storage device, the electrode uses a current collector having holes penetrating therethrough. The active material layer is formed on the current collector. Specifically, the active material layer is coated on the punched surface of the current collector. The active material layer can be coated on one surface of the current collector, or on both surfaces thereof.

In the description above, a laminate-type cell structure is illustrated. However, another cell structure can also be employed. The electric storage device such as a lithium ion secondary battery, lithium ion capacitor, or the like can be formed into a cylindrical cell having band-like positive electrode and negative electrode wound with a separator interposed therebetween. Alternatively, the electric storage device can be formed into a rectangular cell in which a plate-like positive electrode and a plate-like negative electrode are laminated with a separator in three or more layers. Further, the electric storage device can be formed into a large-capacity cell, such as a film-type cell, in which a plate-like positive electrode and a plate-like negative electrode are laminated with a separator in three or more layers, and the resultant is sealed in an outer packaging film.

In the description above, the lithium ion secondary battery and lithium ion capacitor are taken as examples as an electric storage device having electrodes to which a mixture layer that can suitably be coated is applied. However, a battery and electric double layer capacitor other than the above-mentioned lithium ion secondary battery and lithium ion capacitor can naturally also be used, as long as it uses a punched current collector.

Examples of usable positive electrode current collectors include aluminum, stainless, etc. Examples of usable negative electrode current collectors include stainless steel, copper, nickel, etc. The current collector described above is punched to be formed into a conductive porous member. A metal porous member such as a stainless mesh or the like can be used. The same material as that used for the positive electrode current collector and the negative electrode current collector can be used for the current collector used for the lithium ion source. The material that does not react with the lithium ion source can naturally be used.

The holes formed in the current collector can be formed like a metal lath such as an expanded metal, wire lath, punching metal, etching foil, electrolytic etching foil, three-dimensional processed foil (3D), etc.

To be strict, the holes are formed depending upon the type of ions passing through the holes. In the case of lithium ions, each of the holes has a bore diameter of 100 µm or more and 1 mm or less. The number of the holes having the aforesaid bore diameter can be 50 or more per 1 cm² and 5000 or less per 1 cm². When the number of the holes is more than 5000 per 1 cm², the time required for the pre-doping is decreased, but the strength is deteriorated. When the number of the holes is less than 50 per 1 cm², the strength is high, but the time required for the pre-doping is increased.

The active material layer is formed on the punched surface of the current collector. The active material layer is generally formed into a mixture layer by using an active material, a binder, and as needed, a composition such as a conductive assistant. The mixture for the electrode made of the composition described above is formed into a slurry. The thus formed slurry is applied on one surface or both surfaces of the current collector. The mixture layer coated with a predetermined thickness is then dried. The mixture layer is dried for a predetermined time at a predetermined temperature, whereby the electrode is formed.

The active material used for the mixture layer is appropriately selected according to the type of the electric storage device or the type of the electrode. In a case where the electric storage device is the lithium ion secondary battery, for example, the materials described below can be used for the positive electrode active material. Examples of the materials for the positive electrode active material include, in a broad sense, materials containing an oxide of at least one kind of metal atom selected from the V or VI group elements of the periodic table. Examples of the metal oxide include vanadium oxide or niobium oxide. Vanadium pentoxide is more preferable.

In the vanadium oxides, vanadium pentoxide (V₂O₅) has a structure in which a pentahedral unit having VO₅ as one unit spreads in a two-dimensional direction with a covalent bond so as to form a single layer. The layers described above are laminated to form a layered structure as a whole. Lithium ions can be doped between these layers.

In a case where the electric storage device is the lithium ion secondary battery, for example, the materials described below can be used for the negative electrode active material. Specifically, the examples of the materials for the negative electrode include carbon materials such as graphite, hard carbon material, and polyacene-based material. Examples of the polyacene-based material include a PAS that is insoluble and infusible base having a polyacene-based skeletal structure. The negative electrode active materials described above allow lithium ions to be reversibly doped.

Lithium-based materials can also be used. Examples of the lithium-based materials include lithium-based metal materials such as metal lithium or lithium alloy (e.g., Li-Al alloy). Other examples of the lithium-based materials include intermetallic compounds of metal, such as tin or silicon, and metal lithium, or lithium compounds such as lithium nitride.

When a carbon material or the like that allows lithium ions to be doped or de-doped is used, the lithium electrode is separately formed in order to pre-dope the lithium ions from the lithium electrode into the negative electrode at the time of initial charging. Metal lithium or lithium-aluminum alloy can be employed as the lithium ion source. Specifically, a material, which contains at least lithium element and can supply lithium ions, can be employed.

In the specification of the present invention, the term "doping (dope)" involves "occlude", "carry", "absorb" or "insert", and specifically a phenomenon where lithium ions and/or anions enter the positive-electrode active material or the negative-electrode active material. The term "de-doping (de-dope)" involves "release" and "desorb", and specifically a phenomenon where lithium ions or anions are desorbed from the positive-electrode active material or the negative-electrode active material.

When the electric storage device is a lithium ion capacitor, a material that allows lithium ions or anions such as BF4⁻, PF6⁻, etc. that forms a pair with the lithium ion, to be reversibly doped. Examples of the positive electrode active materials include activated carbon, conductive polymer, polyacene-based material, etc. Preferably, the activated carbon that is subject to alkali activation treatment using potassium hydroxide can be used. The activated carbon that is subject to the activation treatment has a large specific area compared to the activated carbon that is not subject to the activation treatment, thus preferable.

Examples of the negative electrode active materials for the lithium ion capacitor include carbon materials such as graphite, hard carbon material, and polyacene-based material. Examples of the polyacene-based material include a PAS that is insoluble and infusible base having a polyacene-based skeletal structure. The negative electrode active materials described above allow ions to be reversibly doped.

Lithium ions are pre-doped into the negative electrode upon the initial charging. Metal lithium or lithium-aluminum alloy can be used as the lithium ion source used for the pre-dope. Specifically, a material, which contains at least lithium element and can supply lithium ions, can be employed.

Usable binders for the mixture layer include rubber binder, or binder resin such as fluorine-based resin, thermoplastic resin, acrylic resin, etc. Examples of the rubber binder include SBR or NBR that is a diene-based polymer, Examples of the fluorine-based resin include polytetrafluoroethylene (PTFE), polyvinylidene fluoride (PDVF), etc. Examples of the thermoplastic resin include polypropylene, polyethylene, etc. Examples of the acrylic resin include acrylic acid 2-ethylhexyl, methacrylate acrylonitrile ethyleneglycol dimethacrylate copolymer, etc.

When the positive electrode active material used for the lithium ion secondary battery is vanadium oxide, for example, the binder needs to be mixed with non-aqueous solvent to be dispersed, since the vanadium pentoxide dissolves in water.

As needed, the conductive assistant used for the mixture layer is mixed. Examples of the conductive assistant include conductive carbon such as Kitchen black, metal such as copper, iron, silver, nickel, palladium, gold, platinum, indium, tungsten, etc., conductive metal oxide such as indium oxide, tin oxide, etc.

The above-mentioned active material, binder, and as needed, the conductive assistant are formed into a slurry by using solvent such as water and N-methyl pyrrolidone. The thus formed slurry can be coated on the current collector with a predetermined thickness. Thereafter, the resultant can be dried under vacuum at 120 °C to 250°C for 12 to 24 hours.

As described above, the current collector used for the electrode has a plurality of holes. Since the holes are formed in the current collector, ions in the electrolyte solution are easy to pass through the current collector. For example, when the lithium ions are pre-doped, the lithium ions are easy to pass. Therefore, the time required for pre-doping the lithium ions can remarkably be decreased compared to the conventional structure in which the current collector is not punched.

The electrode having the aforesaid configuration is appropriately selected according to the electric storage device. The electrode is formed through an electrolyte solution. An electrolyte is contained in the electrolyte solution. In such a lithium ion secondary battery, lithium salts such as CF₃SO₃Li, C₄F₉SO₈Li, (CF₃SO₂)₂NLi, (CF₃SO₂)₃CLi, LibF₄, LiPF₆, LiClO₄, etc. can be used as the electrolyte, for example. The electrolyte described above is dissolved in non-aqueous solvent.

Examples of the non-aqueous solvent include chain carbonate, cyclic carbonate, cyclic ester, nitrile compound, acid anhydride, amide compound, phosphate compound, amine compound, etc. More specifically, examples thereof include ethylene carbonate, diethyl carbonate (DEC), propylene carbonate, dimethoxyethane, γ-butyloractone, N-methyl pyrrolidone, N,N'-dimethyl acetoamide, acetonitrile, mixture of propylene carbonate and dimethoxyethane, mixture of sulfolane and tetrahydrofuran, etc.

The electrolyte layer interposed between the positive electrode and the negative electrode can be the electrolyte solution of the non-aqueous solvent having the electrolyte dissolved therein or a polymer gel (polymer gel electrolyte) containing the electrolyte solution. The one that can allow the lithium ions to smoothly move between the positive electrode and the negative electrode can be employed.

On the other hand, when the lithium ion capacitor is used as the electric storage device, aprotic organic solvent can be employed as the electrolyte solution, for example. The aprotic organic solvent forms electrolyte solution of aprotic organic solvent. Examples of the aprotic organic solvent include ethylene carbonate, propylene carbonate, dimethyl carbonate, diethyl carbonate, γ-butyloractone, acetonitrile, dimethoxyethane, tetrahydrofuran, dioxolan, methylene chloride, sulfolane, etc., wherein these material are used singly or mixed with one another.

An electrolyte that can generate lithium ions can be used. Examples thereof include LiClO₄, LiAsF₆, LiBF₄, LiPF₆, LiN(C₂F₅SO₂)₂, LiN(C₃SO₂)₂, etc.

When the electric storage device is a lithium ion secondary battery or a lithium ion capacitor, it is desirable that the lithium ions are pre-doped into the negative electrode before it is used. Since the holes through which the lithium ions are easy to pass are formed in the current collector, the time required for the pre-doping is certainly decreased. However, the inventors have found that there is a significant variation in the time required for the pre-doping through our detailed examination.

It is revealed that, even if the same electrode mixture material is applied on the same current collector in the same manner, a significant variation is caused. For example, the time required for the pre-doping varies as described below. Specifically, it takes several hours in the electrode having a shorter pre-doping time, or several days in the electrode having a longer pre-doping time. When the electrode is mass-produced, it is necessary that the time required for the pre-doping is set to the maximum time in the variation in order to perfectly executing the pre-doping for all the electric storage devices.

In this case, the pre-doping time is vainly spent in the electric storage device that needs only a short pre-doping time. Further, the case in which the electric storage device is locally over-charged is predicted. As a result, it is anticipated that the characteristic of the electric storage device is deteriorated. The variation in the time required for the pre-doping might largely affect the productivity upon the mass-production or guarantee of quality, depending upon the situation.

So far, an electric storage device has tentatively been assembled in most cases. Therefore, the characteristic of the electric storage device after the completion of the pre-dope has been given importance without considering the time required for the pre-doping. The number of assembly of the electric storage device is less than the number of assembly in the mass-production. However, when an electric storage device is to be mass-produced, the inventors have found that the management of the step before the completion of the pre-doping is significantly important.

It is the present situation that the time required for the pre-doping is rarely managed so far. Specifically, the inventors have tacitly considered that the time required for the pre-doping falls within a predetermined range only by adjusting the aperture ratio of the current collector to be used, the type, grain diameter and amount of the active material, and the type and the amount of the binder to be used, to be within a certain range.

However, the inventors have found through their detailed examination that the time required for the pre-doping largely varies apparently only by making the above-mentioned specification fixed in a predetermined range. Accordingly, a technique for decreasing the variation range is necessarily developed.

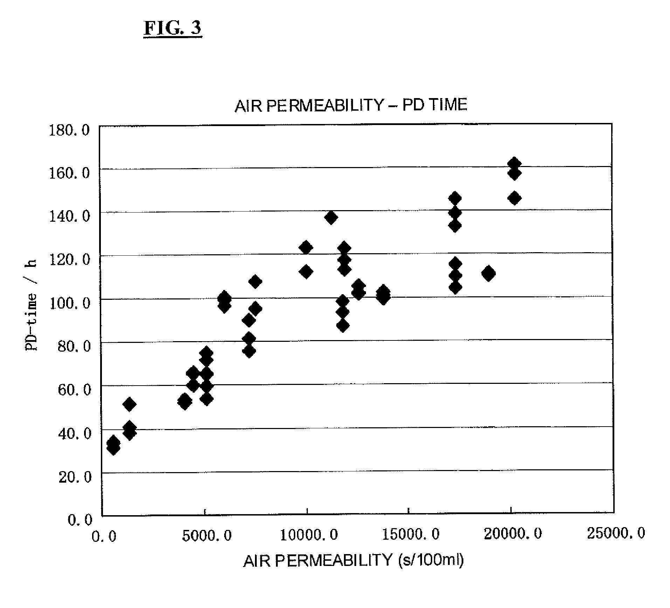

The inventors have found that there is a correlation between the air permeability of an electrode and a time required for a pre-doping (indicated by PD time in the figures) as a result of serious study about the supposed factors. For example, the correlation is as shown in FIG. 3.

Accordingly, the inventors have come up with the idea of controlling the electrode using the punched current collector with the air permeability. Specifically, the inventors have conceived that, through the control of the electrode with the air permeability, the variation in the time required for the pre-doping due to dispersion of lithium ions can be put within a smaller range than the conventional range. The time required for the pre-doping can be put within the predetermined time by allowing the air permeability to fall within a predetermined range. From another point of view, this conception can be known from the viewpoint of the control of the diffusion speed of lithium ions in a sense.

In the specification of the present application, the air permeability is defined to be the time taken for 100 ml of air to pass through a sheet of 642 mm². The air permeability is measured on the basis of JIS P8117, 8111, and ISO 5636/5. The air permeability is measured by using, for example, Gurley type densometer G-B2C or G-B2 (manufactured by Toyo Seiki Seisaku-Sho, Ltd.). The measurement is conducted at temperature of 23 °C ± 1 °C and relative humidity of 50 ± 2 %. A sample is formed by cutting an electrode having a mixture layer containing an active material formed onto a punched current collector having a predetermined aperture ratio. The sample is cut out in a size of 40 x 40 mm².

When the air permeability falls within a numerical range defined in the present specification as a result of converting the air permeability of the electrode obtained by a different air permeability measurement method or based on a different definition of air permeability to the air permeability defined in the present specification even when the air permeability measurement method or the definition of the air permeability is different from that in the present specification, the air permeability in the different situation can be regarded to be within the range of the air permeability in the present specification.

### Embodiment 2

In the Embodiment 2, the manner of providing an index according to the measured air permeability will be described. Specifically, the air permeability of an actual electrode varies depending upon the place where the air permeability is measured, to be strict. In other words, there is a variation in the air permeability. Therefore, the manner of knowing the electrode might be different depending upon how to define the measured air permeability as an index.

As one thing, it is considered that the entire electrode is evaluated at one point on the surface of the mixture layer applied on the current collector. In this case, the result of the measurement at the central point of the electrode surface, where the passing amount of the lithium ions is large, can be utilized. Of course, the air permeability can be measured at the measurement point other than the central point, such as the peripheral of the electrode surface. It is to be noted that the measurement point is preferably the same in all the evaluated electrodes.

There can be cases where the air permeability measured at a different measurement point for each electrode has to be used. For example, when the central measurement point and the peripheral measurement point are compared, the passing amounts of lithium ions are expected to be different because current density differs depending on the distance from the electrode terminal, and there can be cases where the expected passing amount of lithium ions of the central measurement point is larger than that of the peripheral measurement point by 5%.

In such cases, comparison can be made by appropriately weighting for example by multiplying an inverse number of an expected ion passing amount of the peripheral measurement point assuming that an expected ion passing amount of the central measurement point is 1.

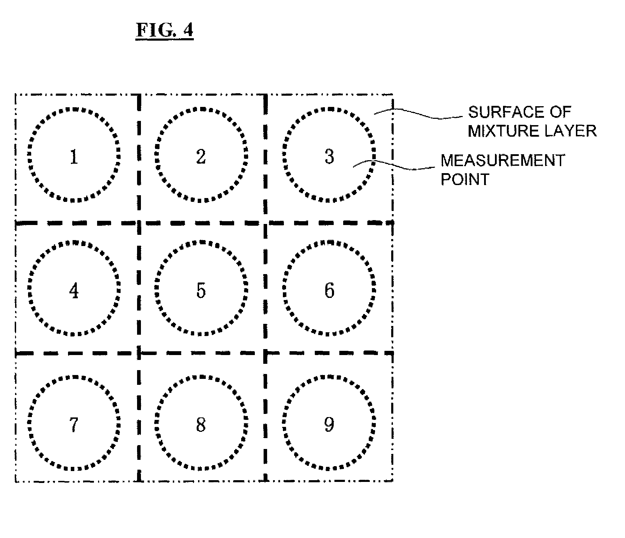

Another method of expressing the air permeability will be described below. For example, the average of the air permeabilities measured at each area of a plurality of divided areas on the electrode surface can be employed. It is considered that the more the divided areas are, the more accurate evaluation the inventors have. As shown in FIG. 4, the entire electrode surface is divided into nine, and the average of the air permeabilities at each of nine sections can be employed.

Alternatively, a certain specific area of the electrode like 5 in Fig. 4, for example, can be specified as the measurement range. The air permeability of the specific area is represented by the average of the air permeabilities at a plurality of points of the specific area, and the air permeability of the entire electrode can be represented by the air permeability of the specific area.

Alternatively, as shown in 1, 3, 5, 7, and 9 in FIG. 4, a plurality of specific areas can be formed, and an average of the air permeabilities of the plurality of specific areas can express the air permeability of the entire electrode. For example, the air permeability of each specific area can be expressed with an average of the plurality of measurement points of the specific areas, and the average of the permeability of the plurality of specific areas can represent the air permeability of the entire electrode.

### Embodiment 3

In the Embodiment 3, the case in which the air permeability of the electrode is put in a predetermined range beforehand during the manufacture of the electrode will be described.

The electrode is configured to include a mixture material made of an active material formed on a current collector. The air permeability is expected to be determined according to the combination of the mixture layer and the current collector. For example, it is supposed that the air permeability of the electrode corresponding to the optimum time required for the pre-doping is 50 seconds/100 ml or more and 2000 seconds/100 ml. The electrode can be manufactured by combining the mixture layer and the current collector such that the air permeability falls within the above-mentioned range.

The components such as active materials configuring the mixture material are important configuration components that determine the potential, and the capacity of the electric storage device, for example. Therefore, what is used for the mixture material is decided first, and then the current collector to be combined with the mixture material is decided; thereby, the air permeability of the electrode is made to fall within the range.

The mixture layer formed on the current collector can be applied by a coater such as a die coater or comma coater. When the coater described above is used, a coating property of the mixture material can be determined by a shear stress in a shear speed so as to make the coating level equal during the manufacture. Since the coating level of the mixture layer to the current collector is made almost equal and the air permeability of the manufactured electrode is put within a certain range as described above, a suitable electrode can efficiently be mass-produced.

Also, the relationship between the electrode made of the combination of the mixture layer and the current collector of generally used composition with the air permeability is examined beforehand desirably. For example, a current collector having a predetermined aperture ratio and serving as a reference is selected, and mixture layers are coated with various compositions on the selected reference current collector, and the resultant is dried to form an electrode.

The air permeability of each of the thus formed electrodes is measured, and the measured air permeabilities are listed. If the air permeability is within the range examined in advance, by referring to the list, the air permeability of the electrode having a mixture layer with a newly determined composition formed on the current collector can be estimated. Then, a composition that makes the estimated air permeability to be within the range is selected, and the electrode is actually manufactured.

### Embodiment 4

In the Embodiment 4, the air permeability of the manufactured electrode is measured so as to sort an electrode according to whether or not the air permeability thereof falls within a predetermined range.

An electrode is composed of punched current collectors and mixture layers formed thereon. It is not too much to say that, in the above-mentioned structure, air permeability of an electrode is determined by the combination of a current collector and a mixture layer. However, it is not so easy to measure the air permeability of a mixture layer of mixture layers. A mixture layer is a mixture including, for example, an active material, conductive assistant, binder, etc.

For example, the combination of these three components is almost innumerable. Even if the components are limited to those having a characteristic used as an electrode, it can be said that the combination is still almost innumerable. In other words, the number of samples necessary for estimating the air permeability of a mixture layer is innumerable, and it is difficult to form a complete list in advance.

Therefore, there can be a case in which it is difficult to estimate air permeability when the composition and the composition ratio of a mixture layer to be developed in the future is different from those of the conventional ones. In such a case, the development is performed in advance, and the developed mixture layer is formed on a punched current collector to form an electrode. In the development, a plurality of mixture layers, each having the same composition but different composition ratio, are prepared.

Each of the prepared plurality of mixture layers is used to form an electrode. The air permeability of each of the plurality of electrodes is measured. The electrode having the air permeability of not less than 50 seconds/100 ml and not more than 2000 seconds/100 ml is sorted from the plurality of electrodes. Alternatively, the electrode having the air permeability of not less than 1200 seconds/100 ml and not more than 1500 seconds/100 ml, which range is narrower than the above-mentioned range, can be sorted from the plurality of electrodes.

By sorting the electrode having predetermined air permeability as described above, a time required for the pre-doping during the actual assembly of a cell can be adjusted within a certain range. Accordingly, production efficiency during the assembly of a cell in a mass production can be increased. Specifically, a time required for an assembly line for pre-doping during the assembly of a cell can be put in a predetermined tact time, whereby production efficiency can be enhanced.

### Embodiment 5

In the Embodiment 5, air permeability of a manufactured electrode is measured, and the manufactured electrodes are divided into some groups according to air permeabilities. The Embodiment 5 describes the case in which the time for the pre-doping is suitably managed for every divided group. This method is effective for the case in which electrodes cannot be limited to those having air permeability within the predetermined range during the manufacture of electrodes. Specifically, this method is well adapted to the case in which there is a large variation in air permeabilities of the manufactured electrodes.

For example, the manufactured electrodes are divided into groups of large, medium, and small, according to air permeability. Specifically, the manufactured electrodes are divided into a group having air permeability of not less than 50 seconds/100 ml and less than 700 seconds/100 ml, a group having air permeability of not less than 700 seconds/100 ml and less than 1400 seconds/100 ml, and a group having air permeability of not less than 1400 seconds/100 ml and not more than 2000 seconds/100 ml.

The group having air permeability of not less than 50 seconds/100 ml and less than 700 seconds/100 ml is defined as a group of large air permeability. The group having air permeability of not less than 700 seconds/100 ml and less than 1400 seconds/100 ml is defined as a group of medium air permeability. The group having air permeability of not less than 1400 seconds/100 ml and not more than 2000 seconds/100 ml is defined as a group of small air permeability.

The electrodes belonging to the group of large air permeability, the electrodes belonging to the group of medium air permeability, and the electrodes belonging to the group of small air permeability are respectively collected to assemble cells. The electrodes belonging to the group of large air permeability needs much time for the pre-dope. Therefore, the number of lithium electrodes are increased, or heat with suitable temperature is applied after the assemble of cells in order to adjust the pre-doping time so as to fall within the level of the pre-doping time required by the electrodes belonging to the group of medium air permeability.

The electrodes belonging to the group of medium air permeability are subject to the pre-dope during the assembly of cells. The electrodes belonging to the group of small air permeability needs short pre-doping time, if the structure is the same. Therefore, the number of the lithium electrodes is decreased in order to adjust the pre-doping time so as to fall within the pre-doping time of the electrodes belonging to the group of medium air permeability.

As described above, the pre-doping time of the electrodes, which are divided into three groups according to air permeability, is adjusted to fall within the pre-doping time of the electrodes belonging to the group of medium air permeability. Therefore, the time required for the pre-doping process during the assembly of cell can be adjusted within a predetermined range, whereby production efficiency can be enhanced.

### Embodiment 6

In the embodiments described above, air permeability is used as an index. However, the air permeability can not directly be used as an index. An index that is correlated with and different from the air permeability can be used. The index that is different from the air permeability can be construed as using the air permeability described in the present invention, as long as the index is correlated with the air permeability.

Examples of the index include generation of gas, uniformity in pre-doping, pre-doping speed, pre-doping time, variation state in formation of SEI, frequency of micro short-circuit during Li deposition, etc. Even if the manner of expression of the index is different, the substantial indication by the index can be the equal level of the indication.

### Embodiment 7

In the above-mentioned embodiments, the air permeability of the electrode at the time of fabricating the electrode is measured. However, in this embodiment, the air permeability of only the mixture layer is measured.

The air permeability of the mixture layer can be measured as described below. Specifically, the mixture layer is coated on a sheet such as a PET film having a high rigidity. The resultant is dried, and then the mixture layer is separated so as to measure the air permeability.

### EXAMPLES

The structure in which the air permeability as described in the above-mentioned embodiments is used as an index will be more specifically explained with reference to examples. The effects prepared by the structure of the present invention will also be described below. The present invention is not limited to the examples described below.

### Example 1

### Fabrication of negative electrode

A furfuryl alcohol, which is a raw material of a furan resin, was retained at 60 °C for 24 hours so as to cure the furfuryl alcohol, to thereby prepare a black resin. The prepared black resin was put into a static electric furnace, and heat-treated for 3 hours under a nitrogen atmosphere until temperature reached 1200 °C. The black resin was retained at 1200 °C for 2 hours. The sample taken out after the cooling was pulverized by a ball mill to prepare hard carbon powders (D50 = 5.0 µm, hydrogen atom/carbon atom = 0.008) as a sample.

Then, 100 parts by weight of the sample and a solution formed by dissolving 10 parts by weight of polyvinylidene fluoride powder in 80 parts by weight of N-methyl pyrrolidone were sufficiently mixed to prepare a slurry for the negative electrode. The slurry for the negative electrode was coated uniformly over both surfaces of a copper expanded metal (manufactured by Nippon Metal Industry Co., Ltd.) having a thickness of 32 µm (aperture ratio of 50 %) by a die coater, and dried and pressed, whereby a negative electrode with a thickness of 70 µm was prepared.

The specific density of the negative electrode active material, which was prepared by averaging the negative electrode active material sampled from all over the coating area, was 4.0 mg/cm². The specific density is a value prepared by dividing the amount of the negative electrode active material coated on the current collector by the area including both the front and back surfaces of the negative electrode.

### Fabrication of positive electrode

85 parts by weight of commercially available activated carbon powder with a specific surface area of 2000 m²/g, 5 parts by weight of acetylene black powder, 6 parts by weight of acrylic resin binder, 4 parts by weight of carboxyl methyl cellulose, and 200 parts by weight of water were fully mixed to prepare a slurry for a positive electrode.

Both surfaces of an aluminum expandable metal having a thickness of 35 µm (aperture ratio of 50%) were coated with a non-aqueous carbon conductive coating by a spraying method, and dried thereby to prepare a positive-electrode current collector having a conductive layer thereon. The total thickness (the sum of the current collector thickness and the conductive layer thickness) of the positive-electrode current collector was 52 µm, and most of the through-holes of the positive-electrode current collector were filled with the conductive coating.

The slurry for the positive electrode was uniformly applied over both surfaces of the positive-electrode current collector by a roll coater, and dried and pressed to prepare a positive electrode having a thickness of 129 µm. The thickness of the positive electrode layer, and the specific density of the positive electrode active material which were prepared by averaging the positive electrode active material sampled from all over the coating area were 77 µm and 3.5 mg/cm² respectively. The specific density is a value prepared by dividing the amount of the positive electrode active material coated on the current collector by the area including both the front and back surfaces of the positive electrode.

### Measurement of air permeability of electrode

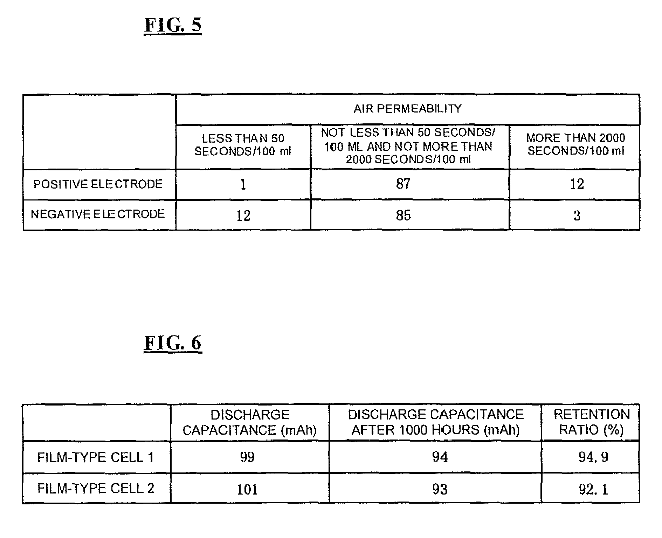

The negative electrode and the positive electrode formed in a roll were cut out in 40 x 40 mm² at intervals of 100 mm so as to form samples. Air permeabilities of 100 samples were measured. As a result of the measurement, there was a variation in the air permeabilities of the samples. As shown in FIG. 5, the electrodes were divided into three groups according to air permeability, and the frequency of each electrode was shown.

The positive and negative electrodes having the air permeability of less than 50 seconds/100 ml were determined to be unusable, since holes were apparently formed or density of the electrode was low. The remaining electrodes belonging to the groups of air permeability of not less than 50 seconds/100 ml and not more than 2000 seconds/100 ml were defined as positive electrodes 1 and negative electrodes 1.

The electrodes belonging to the group of air permeability of more than 2000 seconds/100 ml were defined as positive electrodes 2 and negative electrodes 2. The evaluation described below was performed by using the positive electrodes 1 and 2 and the negative electrodes 1 and 2.

### Fabrication of three-layered laminate unit

The negative electrode 1 was cut out into eleven pieces, each having an area of 6.0 cm x 7.5 cm (excluding the terminal welding parts), and the positive electrode 1 was cut out into ten pieces, each having an area of 5.8 cm x 7.3 cm (excluding the terminal welding parts). A nonwoven fabric made of cellulose/rayon having a thickness of 35 µm was used as a separator.

The positive electrodes 1 and the negative electrodes 1 were laminated in such a way that the positive electrodes 1 and the negative electrodes 1 were alternately laminated through the separator so that the terminal welding parts of the positive-electrode current collectors and the negative-electrode current collectors were set in the opposite sides.

The negative electrode 1 was arranged at the outermost part of the electrode laminate unit. Then, separators were arranged at the uppermost part and the lowermost part, and the four sides of the structure were fastened with a tape. The terminal welding parts (ten sheets) of the positive-electrode current collectors were ultrasonically welded to an aluminum positive electrode terminal (having a width of 50 mm, a length of 50 mm, a thickness of 0.2 mm), and the terminal welding parts (eleven sheets) of the negative-electrode current collectors were ultrasonically welded to a copper negative electrode terminal (having a width of 50 mm, a length of 50 mm, a thickness of 0.2 mm), thereby to prepare an electrode laminate unit 1.

An electrode laminate unit 2 was fabricated by using the positive electrodes 2 and the negative electrodes 2. The structure of the electrode laminate unit 2 was the same as that of the electrode laminate unit 1 except that the electrode laminate unit 2 employed the positive electrodes 2 and the negative electrodes 2.

The lithium electrode was formed by pressing a metal lithium foil onto a stainless steel mesh with a thickness of 80 µm. The lithium electrode was located one by one on the upper part and the lower part of the electrode laminate unit 1 and the electrode laminate unit 2 such that it exactly faces the negative electrode located at the outermost part, whereby three-electrode laminate units 1 and 2 were fabricated. The terminal welding parts of the lithium-electrode current collector were resistance-welded to the negative electrode terminal welding parts.

### Fabrication of cell and impregnation of electrolyte solution

The three-electrode laminate units 1 and 2 were placed in a laminate film deep-drawn by 3.5 mm in accordance with the shape of the respective units. Three sides at the lower part and side parts were heat-sealed.

Then, a funnel was inserted into the remaining one side that was not heat-sealed so as to inject 15 g of propylene carbonate solution as electrolyte solution with a syringe. The propylene carbonate solution was prepared by dissolving LiPF₆ into propylene carbonate so as to have a concentration of 1 mol/l. Thereafter, the remaining one side was sealed under reduced pressure. Thus, five film-type cells 1 and five film-type cells 2 were assembled. The metal lithium located in each cell was equivalent to 500 mAh/g per negative-electrode active material weight.

### Initial evaluation of cell

The thus assembled cells 1 and 2 were left to stand for 14 days after the impregnation of electrolyte solution, and then one cell of the film-type cells 1 and one cell of the film-type cells 2 were disassembled. It was confirmed that no metal lithium remained in the film-type cell 1, but slight amount of metal lithium remained in the film-type cell 2.

The cells were still left to stand for 6 days, and then one of the film-type cells 1 and one of the film-type cells 2 were disassembled. It was confirmed that no metal lithium remained in both cells. From this fact, it was considered that the amount of lithium ion equivalent to 500 mAh/g per negative-electrode active material weight was pre-doped.

As described above, it was confirmed that the air permeability varied as shown in FIG. 5, even in the same coated electrodes. It was further found that the time at which the pre-doping was completed was different depending upon the air permeability. Specifically, when the air permeability exceeds 2000 seconds/100 ml, it takes 14 days or more for the pre-doping, for example.

On the other hand, when the air permeability was not less than 50 seconds/100 ml and not more than 2000 seconds/100 ml, it takes less than 14 days for the pre-doping, for example. It was confirmed that the time required for pre-doping was apparently increased when the air permeability exceeded 2000 seconds/100 ml., compared to the case in which the air permeability was not less than 50 seconds/100 ml and not more than 2000 seconds/100 ml.

### Characteristic evaluation of cell

The cells were charged at a constant current of 1000 mA until the cell voltage reached 3.8 V, and then was charged for thirty minutes by a constant-current constant-voltage charging method in which a constant voltage of 3.8 V was applied. Then, the cell was discharged at a constant current of 500 mA until the cell voltage reached 2.2 V. The cycle of the charging operation to 3.8 V and the discharging operation to 2.2 V was repeated, and when the cycle was repeated 10 times, the capacity and the energy density of the cells were evaluated.

Subsequently, the cells were left in a thermostatic chamber of 60 °C, and then voltage of 3.8 V kept to be applied. After 1000 hours, the temperature was returned to room temperature, and then the capacity of each cell was evaluated. FIG. 6 shows a result. Specifically, the capacity retention ratio after the application of 3.8 V at 60 °C is shown in FIG. 6. Numerical data in FIG. 6 are the averages of three cells.

As shown in FIG. 6, the discharge capacities after 1000 hours are almost the same. However, the difference between the initial discharge capacity and the discharge capacity after 1000 hours of the film-type cell 2 was larger than that of the film-type cell 1. Specifically, the capacity retention ratio after 1000 hours of the film-type cell 2 was lower than that of the film-type cell 1. The reason is considered as follows. Specifically, since the pre-doping time is long for the film-type cell 2, the lithium ions are non-uniformly pre-doped, so that the cell is locally deteriorated.

The present invention has been specifically described above with reference to the embodiments and examples. The present invention is not limited to the aforesaid embodiments and examples, and various modifications are possible without departing from the scope of the present invention.

The present invention is well adaptable to a field for determining a quality of an electrode used for an electric storage device according to air permeability of the electrode.

### LIST OF REFERENCE SIGNS

- 10: = lithium ion secondary battery
- 11: = negative electrode
- 11a: = negative electrode active material
- 11b: = current collector
- 12: = positive electrode
- 12a: = positive electrode active material
- 12b: = current collector
- 13: = separator
- 14: = lithium electrode
- 14a: = metal lithium
- 14b: = current collector
- 100: = lithium ion capacitor
- 110: = negative electrode
- 110a: = negative electrode active material
- 110b: = current collector
- 120: = positive electrode
- 120a: = positive electrode active material
- 120b: = current collector
- 130: = separator
- 140: = lithium electrode
- 140a: = metal lithium
- 140b: = current collector

## Claims

1. An electric storage device,
wherein all of the electrodes (11, 12, 14; 110, 120, 140) used therein have an air permeability not less than 50 seconds/100 ml and not more than 2000 seconds/100 ml.

2. The electric storage device according to claim 1,
wherein the electric storage device is a lithium ion secondary battery (10) or a lithium ion capacitor (100).

3. A method of fabricating an electrode,
the method comprising a step of defining the air permeability of the electrode (11, 12, 14; 110, 120, 140) as an index.

4. The method according to claim 3,
wherein the step of defining the air permeability of the electrode (11, 12, 14; 110, 120, 140) as an index comprises:
- a step of estimating the air permeability of an electrode (11, 12, 14; 110, 120, 140) to be fabricated from a composition of a mixture layer of an electrode (11, 12, 14; 110, 120, 140) to be fabricated based on a known air permeability of a plurality of electrodes having different compositions of mixture layers that is measured in advance, and
- selecting a composition of a mixture layer of an electrode (11, 12, 14; 110, 120, 140) that is fabricated actually such that the estimated permeability falls within a predetermined range using the estimated permeability as an index.

5. The method according to claim 3,
wherein the step of defining the air permeability of the electrode (11, 12, 14; 110, 120, 140) as an index is a step of measuring an electrode that is fabricated actually, and sorting an electrode having an air permeability within a predetermined range using the air permeability of the electrode as an index.

6. The method according to any one of claims 3 to 5,
wherein a pre-doping time of an electrode (11, 12, 14; 110, 120, 140) is estimated using the air permeability of an electrode as an index.

7. The method according to claim 4 or 5,
wherein the predetermined range of an electrode (11, 12, 14; 110, 120, 140) is not less than 50 seconds/100 ml and not more than 2000 seconds/100 ml.

8. The method according to any one of claims 3 to 7,
wherein the air permeability of the electrode (11, 12, 14; 110, 120, 140) is measured at a specific point of the electrode.

9. The method according to any one of claims 3 to 7,
wherein the air permeability of the electrode (11, 12, 14; 110, 120, 140) is obtained by measuring air permeability of the electrode at any point of the electrode, and multiplying a weighting function different for each measurement point.

10. The method according to any one of claims 3 to 7,
wherein the air permeability of the electrode (11, 12, 14; 110, 120, 140) is an average of permeabilities measured at a plurality of specific points of the electrode.

11. The method according to any one of claims 3 to 10,
wherein an index that is correlated to and different from the air permeability is used instead of the index of the air permeability or together with the index of the air permeability.

12. An electrode fabricated by a method according to any of claims 3 to 11,
wherein all of the electrodes (11, 12, 14; 110, 120, 140) have air permeability not less than 50 seconds/100 ml and not more than 2000 seconds/100 ml.

13. The electrode according to claim 12,
wherein the electrode (11, 12, 14; 110, 120, 140) is used for an electric storage device (10, 100) to which lithium can be pre-doped and that can be charged or discharged.

14. The electrode according to claim 13,
wherein the electric storage device is a lithium ion secondary battery (10) or a lithium ion capacitor (100).

15. A method of managing an electrode,
wherein the electrode (11, 12, 14; 110, 120, 140) is classified using the air permeability of the electrode as an index.

16. The method of managing an electrode according to claim 15,
wherein an index that is correlated to and different from the air permeability is used instead of the index of the air permeability or together with the index of the air permeability.

17. The method of managing an electrode according to claim 15 or 16,
wherein the air permeability of the electrode (11, 12, 14; 110, 120, 140) is measured at a specific point of the electrode.

18. The method of managing an electrode according to claim 15 or 16,
wherein the air permeability of the electrode (11, 12, 14; 110, 120, 140) is obtained by measuring the air permeability of the electrode at any point of the electrode, and multiplying a weighting function different for each measurement point.

19. The method of managing an electrode according to claim 15 or 16,
wherein the air permeability of the electrode (11, 12, 14; 110, 120, 140) is an average of permeabilities measured at a plurality of specific points of the electrode.
